# EUROPÄISCHE PATENTANMELDUNG

(11) **EP 3 629 454 A1**
(43) Veröffentlichungstag der Anmeldung: **01.04.2020**
(21) Anmeldenummer: 18197408.0
(22) Anmeldetag: 28.09.2018
(51) Int. Cl.: H02K 15/03, H02K 15/00, H02K 1/27, H02K 7/18

(54) **VERFAHREN ZUR HERSTELLUNG EINES ROTORS FÜR EINE ELEKTRISCHE ROTIERENDE MASCHINE**

(71) Anmelder: Siemens Aktiengesellschaft, 80333 München (DE)
(72) Erfinder: Ade, Michael, 13503 Berlin (DE)

(57) **Zusammenfassung**

Die Erfindung betrifft ein Verfahren zur Herstellung eines Rotors (6) für eine elektrische rotierende Maschine (2) mit einem magnetfeldführenden, insbesondere wirbelstromunterdrückenden, Rotorelement (12) und mindestens einem Permanentmagneten (14). Um einen Rotor (6) anzugeben, der, im Vergleich zum Stand der Technik, einfacher und kostengünstiger herzustellen ist, wird vorgeschlagen, dass der Permanentmagnet (14) mittels eines additiven Fertigungsverfahrens mit dem magnetfeldführenden Rotorelement (12) verbunden wird.

## Beschreibung

Die Erfindung betrifft ein Verfahren zur Herstellung eines Rotors für eine elektrische rotierende Maschine mit einem magnetfeldführenden, insbesondere wirbelstromunterdrückenden, Rotorelement und mindestens einem Permanentmagneten.

Die Erfindung betrifft darüber hinaus einen Rotor für eine elektrische rotierende Maschine, welcher mit einem derartigen Verfahren hergestellt ist.

Ferner betrifft die Erfindung eine elektrische rotierende Maschine mit mindestens einem derartigen Rotor.

Des Weiteren betrifft die Erfindung eine Windkraftanlage mit mindestens einer derartigen elektrischen rotierenden Maschine.

Elektrische rotierende Maschinen sind beispielsweise als permanenterregte Synchronmaschinen, insbesondere als permanenterregte Drehstromsynchronmaschinen, ausgebildet. Derartige permanenterregte Drehstromsynchronmaschinen sind beispielsweise als Motor oder auch als Generator betreibbar. Ein Generator wird beispielsweise als Windgenerator in einer Windkraftanlage eingesetzt, wobei insbesondere Direct Drive Windgeneratoren einen Durchmesser von mehreren Metern aufweisen.

Permanenterregte Synchronmaschinen weisen einen Rotor mit Permanentmagneten auf, welche mit einem magnetfeldführenden, insbesondere wirbelstromunterdrückenden, Rotorelement, beispielsweise einem Rotorblechpaket oder einem massiven Rotorjoch verbunden sind, um die Magnete während des Betriebes der elektrischen rotierenden Maschine zu sichern. Die Sicherung der Magnete, insbesondere bei sehr großen Maschinen, ist sehr aufwändig und teuer.

Die Offenlegungsschrift DE 10 2010 041 593 A1 beschreibt eine Magnetpolabdeckung für einen Pol eines Rotors einer elektrischen Maschine, welche eine erste Seitenlasche, eine zweite Seitenlasche, eine erste Seitenwand, eine zweite Seitenwand, eine Öffnung und einen zentralen Abdeckbereich zwischen der ersten Seitenwand und der zweiten Seitenwand aufweist.

Die Offenlegungsschrift EP 2 587 633 A1 beschreibt ein Magnet-Abdeckblechmodul zum individuellen Positionieren und Schützen von Dauermagneten auf einem Rotorjoch für Windkraftanlagen. Das Magnetmodul weist eine Magnetabdeckplatte aus einem weichmagnetischen Werkstoff zum individuellen Abdecken der Dauermagnete auf, wobei eine nichtmagnetische Platte dauerhaft an der Magnetabdeckplatte befestigt ist. Die nichtmagnetische Platte weist Mittel zum Befestigen des Magnetabdeckplattenmoduls an einer Außenfläche des Rotorjochs auf, wobei die Befestigungsmittel abnehmbar sind, um eine separate Montage und Demontage des Abdeckplattenmoduls zu ermöglichen. Zusätzlich ist auf einer Innenfläche des Rotorjochs ein magnetischer Extender zur Führung des Magnetflusses und zur Vermeidung von Streuflüssen angeordnet.

Die Offenlegungsschrift DE 10 2012 006 248 A1 beschreibt einen Kurzschlussläufer umfassend einen Kern, eine Vielzahl von Schlitzlöchern, die in dem Kern ausgebildet sind und sich entlang einer Drehachse des Kerns erstrecken, leitfähige Stangen, die in den Schlitzlöchern angeordnet sind und ein Paar leitfähiger Endringe, die an beiden Enden des Kerns angeordnet sind und miteinander mittels der leitfähigen Stangen verbunden sind. Zumindest eines aus den leitfähigen Stangen und dem Paar von leitfähigen Endringen ist durch ein Deckschichtmaterial aufgebaut, das durch Spritzen von Festkörperleiterpartikeln ausgebildet ist.

Die Offenlegungsschrift EP 2 555 385 A1 beschreibt eine Permanentmagnetanordnung mit einer Grundplatte und mindestens einem Permanentmagneten, der an der Grundplatte befestigt ist. Der mindestens eine Permanentmagnet ist durch eine Kunststoffhaube abgedeckt.

Die Offenlegungsschrift EP 1 844 181 A1 beschreibt ein Verfahren zum Beschichten eines Werkstückes mittels Kaltgasspritzen. Hierbei wird eine Kaltgas-Spritzdüse verwendet, die einen auf die Oberfläche gerichteten Teilchenstrahl erzeugt.

Der Erfindung liegt die Aufgabe zugrunde, ein Verfahren zur Herstellung eines Rotors für eine elektrische rotierende Maschine mit einem magnetfeldführenden, insbesondere wirbelstromunterdrückenden, Rotorelement und mindestens einem Permanentmagneten anzugeben, welches, im Vergleich zum Stand der Technik, einfacher und kostengünstiger ist.

Die Aufgabe wird erfindungsgemäß durch ein Verfahren der eingangs genannten Art gelöst, wobei der Permanentmagnet mittels eines additiven Fertigungsverfahrens mit dem magnetfeldführenden Rotorelement verbunden wird.

Ferner wird die Aufgabe erfindungsgemäß durch einen Rotor für eine elektrische rotierende Maschine gelöst, welcher mit einem derartigen Verfahren hergestellt ist.

Darüber hinaus wird die Aufgabe erfindungsgemäß durch eine elektrische rotierende Maschine mit mindestens einem derartigen Rotor gelöst.

Zudem wird die Aufgabe erfindungsgemäß durch eine Windkraftanlage mit mindestens einer derartigen elektrischen rotierenden Maschine gelöst.

Die in Bezug auf das Verfahren nachstehend angeführten Vorteile und bevorzugten Ausgestaltungen lassen sich sinngemäß auf den Rotor, die elektrische rotierende Maschine und die Windkraftanlage übertragen.

Der Erfindung liegt die Überlegung zugrunde, die Herstellung eines Rotors durch die Befestigung mindestens eines Permanentmagneten mit Hilfe eines additiven Fertigungsverfahrens zu vereinfachen. Derartige additive Fertigungsverfahren sind beispielsweise Pulverbettverfahren wie selektives Laserschmelzen oder selektives Lasersintern, Freiraumverfahren wie Auftragschweißen, Flüssigmaterialverfahren wie Stereolithografie, oder andere Schichtaufbauverfahren wie 3D-Siebdruck. Der mindestens eine Permanentmagnet wird auf einem magnetfeldführenden Rotorelement mit Hilfe des additiven Fertigungsverfahrens befestigt, um die Permanentmagnete während des Betriebes zu sichern, wobei das magnetfeldführende Rotorelement aus einem weichmagnetischen Werkstoff, insbesondere aus Stahl, gefertigt und als Blechpaket oder als massives Rotorjoch ausgeführt ist. Durch die Befestigung der Permanentmagnete mit Hilfe eines additiven Fertigungsverfahrens wird die Bearbeitung der Rotoroberfläche vereinfacht und die Anzahl von Prozessschritten zur Herstellung des Rotors reduziert, wodurch Kosten eingespart werden.

Bei einer vorteilhaften Ausgestaltung wird der mindestens eine Permanentmagnet vor der Verbindung mit dem magnetfeldführenden Rotorelement magnetisiert. Eine Magnetisierung des Permanentmagneten vor der Verbindung mit dem magnetfeldführenden Rotorelement vereinfacht die Fertigung des Rotors.

In einer bevorzugten Ausführungsform wird der Permanentmagnet mittels Kaltgasspritzen mit dem magnetfeldführenden Rotorelement verbunden. Mit Hilfe von Kaltgasspritzen sind, im Vergleich zu anderen additiven Fertigungsverfahren, dicke Schichten, beispielsweise im Millimeterbereich und im Zentimeterbereich, in kurzer Zeit und geometrisch sehr flexibel herstellbar. Da das mittels Kaltgasspritzen aufgetragene Material nicht geschmolzen, sondern durch seine kinetische Energie verformt wird und dadurch eine dichte und fest haftende Schicht bildet, sind der Permanentmagnet und das magnetfeldführende Rotorelement nur geringen Temperaturbelastungen ausgesetzt. Darüber hinaus werden thermisch induzierte Spannungen, insbesondere im Bereich der Verbindung, weitestgehend vermieden.

Besonders vorteilhaft wird der Permanentmagnet über Verbindungsmittel mit dem magnetfeldführenden Rotorelement verbunden, wobei die Verbindungsmittel, insbesondere elektrisch leitfähige, Festkörperpartikel umfassen, welche mittels Kaltgasspritzen zur Verbindung des Permanentmagneten mit dem magnetfeldführenden Rotorelement aufgesprüht werden. Die Verbindungsmittel stellen auf einfache Weise, durch Bildung einer dichten und fest haftenden Schicht, eine stabile Verbindung zwischen dem Permanentmagneten und dem magnetfeldführenden Rotorelement her. Das Kaltgasspritzen bietet eine große Flexibilität hinsichtlich der Form, der Dicke und des Materials.

Bei einer weiteren vorteilhaften Ausgestaltung werden die Festkörperpartikel der Verbindungsmittel aus einem unmagnetischen metallischen Werkstoff, insbesondere aus einem Edelstahl, hergestellt. Durch die Verwendung unmagnetischer Festkörperpartikel wird die Herstellung der Verbindung, insbesondere bei einem magnetisierten Permanentmagneten, vereinfacht. Ferner sind unmagnetische Festkörperpartikel für die Flussführung in der Maschine vorteilhaft, sodass beispielsweise Streuflüsse zumindest minimiert werden.

In einer bevorzugten Ausführungsform umfassen die Verbindungsmittel eine Abdeckung, von der der Permanentmagnet zumindest teilweise bedeckt wird. Durch die Abdeckung wird der Permanentmagnet, insbesondere in Radialrichtung, gesichert. Ferner wird der Permanentmagnet durch die Abdeckung vor äußeren Einflüssen geschützt.

Besonders vorteilhaft wird die Abdeckung aus einem unmagnetischen metallischen Werkstoff, insbesondere aus Edelstahl, hergestellt. Durch die Verwendung eines unmagnetischen metallischen Werkstoffs wird die Montage der Abdeckung, insbesondere bei einem magnetisierten Permanentmagneten, vereinfacht. Bei einer weiteren vorteilhaften Ausgestaltung ist die Abdeckung aus Festkörperpartikeln aufgebaut, welche mittels Kaltgasspritzen aufgesprüht werden. Durch das Aufsprühen der Abdeckung wird der Permanentmagnet auf einfache und kostengünstige Weise geschützt, da beispielsweise ein Vergießen des Permanentmagneten in der Abdeckung entfällt. Durch das Kaltgasspritzen ergibt sich eine große Flexibilität, beispielsweise hinsichtlich einer Materialstärke und Form der Abdeckung.

In einer weiteren vorteilhaften Ausführungsform werden die Festkörperpartikel der Abdeckung direkt auf den Permanentmagneten aufgesprüht. Durch das direkte Aufsprühen der Festkörperpartikel wird die Fertigung des Rotors zusätzlich vereinfacht.

Bei einer weiteren vorteilhaften Ausgestaltung umfassen die Verbindungsmittel eine Grundplatte, welche zwischen dem Permanentmagneten und dem magnetfeldführenden Rotorelement angeordnet wird. Mit Hilfe der Grundplatte ist beispielsweise ein Magnetmodul mit einer Abdeckung und einer Grundplatte mit sehr wenigen Prozessschritten automatisiert herstellbar, wodurch Kosten eingespart werden.

Besonders vorteilhaft wird die Abdeckung mit der Grundplatte mittels Kaltgasspritzen verbunden. Da das mittels Kaltgasspritzen aufgetragene Material nicht geschmolzen, sondern durch seine kinetische Energie verformt wird, sind der Permanentmagnet und die Grundplatte nur geringen Temperaturbelastungen ausgesetzt.

In einer weiteren vorteilhaften Ausführungsform wird die Grundplatte mit dem magnetfeldführenden Rotorelement mittels Kaltgasspritzen verbunden. Da das mittels Kaltgasspritzen aufgetragene Material nicht geschmolzen, sondern durch seine kinetische Energie verformt wird, werden thermisch induzierte Spannungen, insbesondere im Bereich der Verbindung, weitestgehend vermieden.

Bei einer weiteren vorteilhaften Ausgestaltung wird der mindestens eine Permanentmagnet zumindest teilweise mittels Kaltgasspritzen hergestellt. Beispielsweise wird der Permanentmagnet direkt auf ein Rotorjoch aufgesprüht, sodass keine zusätzliche Abdeckung zur Fixierung des Permanentmagneten erforderlich ist. Somit wird die Anzahl der Prozessschritte zur Herstellung des Rotors reduziert und es werden Kosten eingespart.

Besonders vorteilhaft werden bei der Herstellung des mindestens einen Permanentmagneten mindestens zwei magnetische Werkstoffe mit unterschiedlichen magnetischen Eigenschaften verwendet. Werkstoffe mit unterschiedlichen magnetischen Eigenschaften sind beispielsweise ein hartmagnetischer Werkstoff und ein weichmagnetischer Werkstoff. Beispielsweise sind Permanentmagnete mit lokal unterschiedlichen magnetischen Eigenschaften herstellbar, sodass ein Permanentmagnet Bereiche unterschiedlicher magnetische Flussdichte aufweist wodurch eine Verbesserung der Feldhomogenität, insbesondere im Luftspalt, erreicht wird.

In einer weiteren vorteilhaften Ausführungsform wird eine Form des mindestens einen Permanentmagneten derartig gewählt, dass ein Oberwellenmoment zumindest reduziert wird. Beispielsweise werden Ecken eines quaderförmigen Permanentmagneten abgerundet, um das Oberwellenmoment zumindest zu reduzieren. Durch eine Anpassung der Form des Permanentmagneten wird eine Verbesserung der elektrischen Eigenschaften des Rotors einfach und kostengünstig ermöglicht.

Im Folgenden wird die Erfindung anhand der in den Figuren dargestellten Ausführungsbeispiele näher beschrieben und erläutert.

Es zeigen:
- FIG 1: eine dreidimensionale Schnittdarstellung einer elektrischen rotierenden Maschine,
- FIG 2: eine dreidimensionale Schnittdarstellung des Rotors der elektrischen rotierenden Maschine,
- FIG 3: eine schematische Darstellung eines ersten Verfahrens zur Herstellung eines Rotors,
- FIG 4: eine schematische Darstellung eines Verfahrens zur Herstellung eines Magnetmoduls,
- FIG 5: eine schematische Darstellung eines Verfahrens zur Herstellung mindestens eines zumindest teilweise gedruckten Permanentmagneten auf einer Grundplatte,
- FIG 6: eine schematische Darstellung eines zweiten Verfahrens zur Herstellung eines Rotors,
- FIG 7: eine schematische Darstellung eines dritten Verfahrens zur Herstellung eines Rotors,
- FIG 8: eine schematische Darstellung eines vierten Verfahrens zur Herstellung eines Rotors,
- FIG 9: eine schematische Darstellung eines fünften Verfahrens zur Herstellung eines Rotors,
- FIG 10: eine Querschnittdarstellung einer ersten Ausführungsform eines Permanentmagneten,
- FIG 11: eine Querschnittdarstellung einer zweiten Ausführungsform eines Permanentmagneten,
- FIG 12: eine Querschnittdarstellung einer dritten Ausführungsform eines Permanentmagneten,
- FIG 13: eine schematische Darstellung einer ersten Ausführungsform einer Anordnung von Permanentmagneten auf einer Rotoroberfläche,
- FIG 14: eine schematische Darstellung einer zweiten Ausführungsform einer Anordnung von Permanentmagneten auf einer Rotoroberfläche,
- FIG 15: eine schematische Darstellung einer dritten Ausführungsform einer Anordnung von Permanentmagneten auf einer Rotoroberfläche und
- FIG 16: eine schematische Darstellung eines Windkraftrades mit einer elektrischen rotierenden Maschine.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

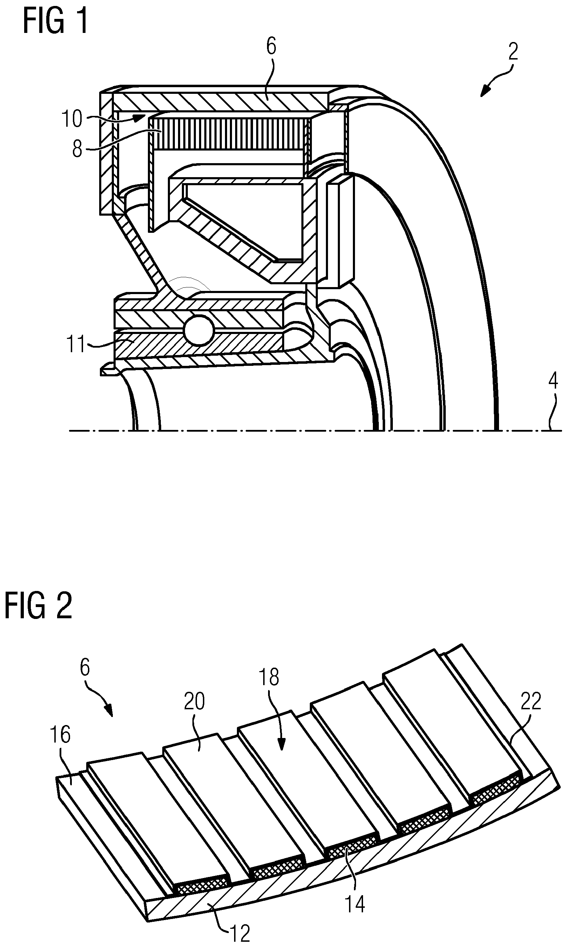

FIG 1 zeigt eine dreidimensionale Schnittdarstellung einer elektrischen rotierenden Maschine 2. Die elektrische rotierende Maschine 2 ist als permanenterregte Synchronmaschine ausgeführt und umfasst einen um eine Rotationsachse 4 rotierbaren Rotor 6. Die Rotationsachse 4 definiert eine Axialrichtung, eine Radialrichtung und eine Umfangsrichtung. Der Rotor 6 ist exemplarisch als Außenläufer ausgeführt und umfasst Permanentmagnete, welche aus Gründen der Übersichtlichkeit in FIG 1 nicht dargestellt sind. Darüber hinaus weist die elektrische rotierende Maschine 2 einen Stator 8 auf, welcher innerhalb des als Außenläufer ausgeführten Rotors 6 angeordnet ist. Zwischen dem Rotor 6 und dem Stator 8 ist ein Spalt 10, der insbesondere als Luftspalt ausgeführt ist, ausgebildet. Der Rotor 6 ist über ein Lager 11, welches in FIG 1 schematisch dargestellt ist, gelagert.

FIG 2 zeigt eine dreidimensionale Schnittdarstellung des Rotors 6 der elektrischen rotierenden Maschine 2. Der Rotor 8 umfasst ein magnetfeldführendes, insbesondere wirbelstromunterdrückendes, Rotorelement 12 und Permanentmagnete 14. Das magnetfeldführende, insbesondere wirbelstromunterdrückende, Rotorelement 12 ist beispielsweise als massives Rotorjoch ausgeführt, welches aus einem weichmagnetischen Werkstoff, insbesondere aus Stahl, gefertigt ist. Alternativ ist das magnetfeldführende, insbesondere wirbelstromunterdrückende, Rotorelement 12 als Blechpaket ausgeführt. Das Blechpaket ist beispielsweise aus einer Vielzahl von gestapelten Elektroblechen aufgebaut. Die Permanentmagnete 14 sind in Umfangsrichtung auf einer zumindest teilweise konkav ausgeführten Rotoroberfläche 16 angeordnet. Alternativ ist die Rotoroberfläche 16 als Polygonzugoberfläche ausgeführt. Eine Polygonzugoberfläche weist im Querschnitt die Form eines N-Ecks auf, wobei die Permanentmagnete auf ebenen Abschnitten der Polygonzugoberfläche angeordnet sind. Beispielsweise entspricht N einer Polzahl der elektrischen rotierenden Maschine 2. Optional sind jeweils mindestens zwei Permanentmagnete 14 in Axialrichtung hintereinander angeordnet.

Die Permanentmagnete 14 sind mit dem magnetfeldführenden Rotorelement 12 über Verbindungsmittel 18 verbunden. Die Verbindungsmittel 18 umfassen zumindest eine Abdeckung 20 und einen Verbindungswerkstoff, durch welchen die Permanentmagnete 14 mittels eines additiven Fertigungsverfahrens mit dem magnetfeldführenden Rotorelement 12 verbunden werden. Additive Fertigungsverfahren sind beispielsweise Pulverbettverfahren wie selektives Laserschmelzen oder selektives Lasersintern, Freiraumverfahren wie Auftragschweißen oder Kaltgasspritzen, Flüssigmaterialverfahren wie Stereolithografie oder andere Schichtaufbauverfahren wie 3D-Siebdruck. Beispielswiese werden als Verbindungswerkstoff elektrisch leitfähige unmagnetische Festkörperpartikel 22 verwendet, welche mit Hilfe von Kaltgasspritzen, auf Englisch Coldspray, aufgesprüht werden. Unmagnetische Festkörperpartikel sind für die Flussführung in der elektrischen rotierenden Maschine 2 vorteilhaft, sodass beispielsweise Streuflüsse zumindest minimiert werden. Durch die mittels Kaltgasspritzen aufgetragenen Festkörperpartikel 22 wird die Abdeckung 20, welche im Wesentlichen der Form der Permanentmagnete 14 angepasst ist, mit dem magnetfeldführenden Rotorelement 12 verbunden, sodass die Permanentmagnete 14 fixiert und damit gesichert sind. Eine Form der Permanentmagnete 14 wird derartig gewählt, dass ein Oberwellenmoment zumindest reduziert wird. Ein Oberwellenmoment wird beispielsweise reduziert, indem Ecken eines insbesondere quaderförmigen Permanentmagneten 14 abgerundet werden.

Die Abdeckung 20 wird aus einem unmagnetischen metallischen Werkstoff, insbesondere aus Edelstahl, hergestellt. Darüber hinaus sind die Permanentmagnete 14 in Axialrichtung, beispielsweise formschlüssig, gesichert, was aus Gründen der Übersichtlichkeit nicht in FIG 2 dargestellt ist. Optional sind die Permanentmagnete 14 unter der Abdeckung 20 vergossen. Die weitere Ausgestaltung des Rotors 6 in FIG 2 entspricht der in FIG 1.

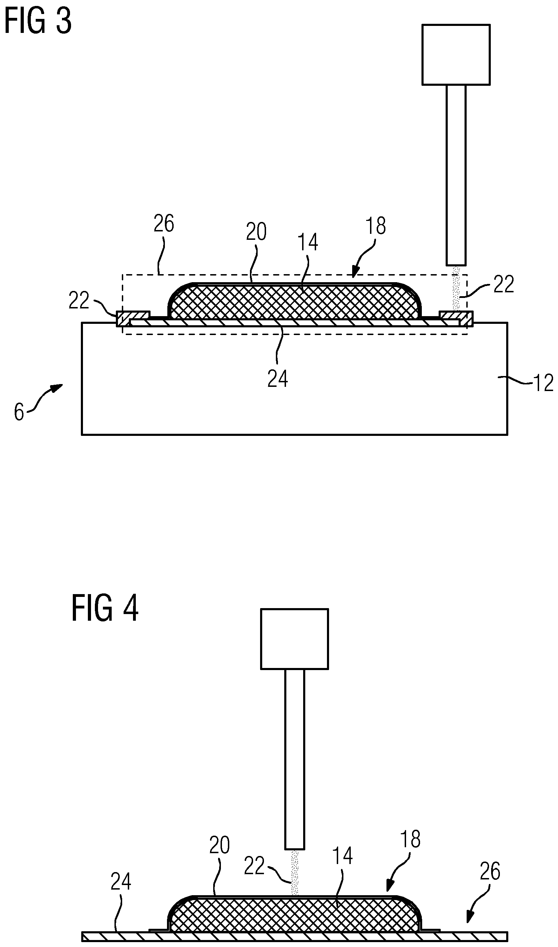

FIG 3 zeigt eine schematische Darstellung eines ersten Verfahrens zur Herstellung eines Rotors 6. Mindestens ein Permanentmagnet 14 wird mit Hilfe von Verbindungsmitteln 18 mit einem magnetfeldführenden Rotorelement 12 verbunden, wobei die Verbindungsmittel 18 eine Abdeckung 20 und eine Grundplatte 24 umfassen. Die Abdeckung 20 und die Grundplatte 24 umschließen den Permanentmagnet 14 zumindest teilweise und bilden ein Magnetmodul 26, wobei die Abdeckung 20 mit der Grundplatte 24 über eine stoffschlüssige Verbindung, insbesondere über eine Schweißverbindung und/oder über Verbindungselemente, insbesondere Schrauben und/oder Nieten, verbunden ist. Die Grundplatte 24 ist aus einem, insbesondere magnetfeldführenden, metallischen Werkstoff hergestellt und weist ebene Auflageflächen auf. Die Verbindungsmittel 18 umfassen darüber hinaus elektrisch leitfähige unmagnetische Festkörperpartikel 22, welche mittels Kaltgasspritzen aufgesprüht werden. Die Festkörperpartikel 22 werden mittels Kaltgasspritzen derartig aufgesprüht, dass das Magnetmodul 26 auf dem magnetfeldführenden Rotorelement 12 fixiert und damit gesichert wird. Der mindestens eine Permanentmagnet 14 wird vor der Verbindung mit dem magnetfeldführenden Rotorelement 12, beispielsweise nach der Herstellung des Magnetmoduls 26, magnetisiert. Die weitere Ausgestaltung des Rotors 6 in FIG 3 entspricht der in FIG 2.

FIG 4 zeigt eine schematische Darstellung eines Verfahrens zur Herstellung eines Magnetmoduls 26. Mindestens ein Permanentmagnet 14 wird auf eine Grundplatte 24 aufgelegt. Daraufhin werden Festkörperpartikel 22 mittels Kaltgasspritzen direkt auf den Permanentmagnet 14 und die Grundplatte 24 aufgesprüht, sodass die Festkörperpartikel 22 eine Abdeckung 20 bilden, von der der Permanentmagnet (14) zumindest teilweise bedeckt wird, und die Abdeckung 20 den Permanentmagnet 14 auf der Grundplatte 24 fixiert. Die Festkörperpartikel 22 sind aus einem unmagnetischen metallischen Werkstoff, insbesondere aus Edelstahl, hergestellt. Nach dem Fixieren des mindestens einen Permanentmagneten 14 wird dieser magnetisiert. Die weitere Ausgestaltung des Magnetmoduls 26 in FIG 4 entspricht der in FIG 3.

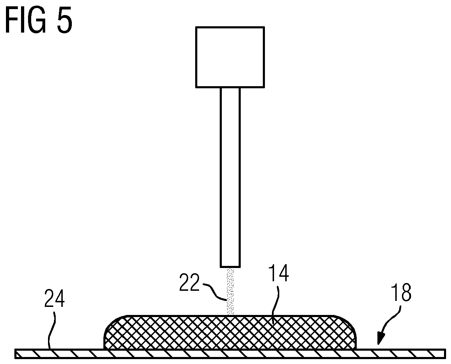

FIG 5 zeigt eine schematische Darstellung eines Verfahrens zur Herstellung mindestens eines zumindest teilweise gedruckten Permanentmagneten 14 auf einer Grundplatte 24, wobei der Permanentmagnet 14 zumindest teilweise mittels Kaltgasspritzen hergestellt wird. Bei der Herstellung des Permanentmagneten 14 mittels Kaltgasspritzen werden Festkörperpartikel 22 direkt auf die Grundplatte 26 gesprüht, wobei Festkörperpartikel 22 aus einem magnetischen Werkstoff verwendet werden. Die Festkörperpartikel 22 weisen beispielsweise Eisen, Nickel, Kobalt, Samarium-Kobalt, Aluminium-Nickel-Kobalt, Neodym-Eisen-Bor und/oder Samarium-Eisen-Nickel auf. Optional werden Festkörperpartikel 22 aus mindestens zwei magnetischen Werkstoffen mit unterschiedlichen magnetischen Eigenschaften verwendet. Werkstoffe mit unterschiedlichen magnetischen Eigenschaften sind beispielsweise ein hartmagnetischer Werkstoff wie Neodym-Eisen-Bor und ein weichmagnetischer Werkstoff wie Eisen. Optional wird in einem weiteren Schritt, beispielsweise mittels Kaltgasspritzen, eine Abdeckung 20 auf dem Permanentmagnet 14 angeordnet und mit der Grundplatte 24 verbunden. Nach der Herstellung des mindestens einen Permanentmagneten 14 wird dieser magnetisiert. Die weitere Ausgestaltung des Permanentmagneten 14 in FIG 5 entspricht der in FIG 4.

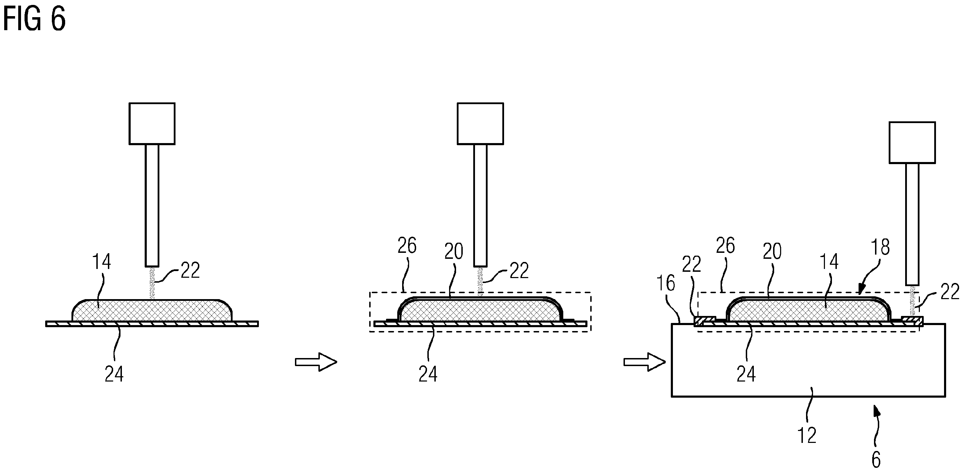

FIG 6 zeigt eine schematische Darstellung eines zweiten Verfahrens zur Herstellung eines Rotors 6. Zunächst wird, wie in FIG 5 gezeigt, mindestens ein Permanentmagnet 14 auf einer Grundplatte 26, zumindest teilweise, mittels Kaltgasspritzen hergestellt. Insbesondere werden Festkörperpartikel 22 direkt auf die Grundplatte 26 gesprüht, sodass der Permanentmagnet 14 direkt mit der Grundplatte 26 verbunden ist.

In einem weiteren Schritt wird, wie in FIG 4 gezeigt, ein Magnetmodul 26 hergestellt, indem eine Abdeckung 20 mittels Kaltgasspritzen auf den Permanentmagnet 14 und die Grundplatte 24 aufgesprüht wird, sodass die Abdeckung 20 sowohl mit dem Permanentmagneten 14 als auch mit der Grundplatte 24 verbunden ist. Der mindestens eine Permanentmagnet 14 wird nach der Herstellung des Magnetmoduls 26 magnetisiert.

In einem weiteren Schritt wird das Magnetmodul 26 auf einer Oberfläche 16 eines magnetfeldführenden Rotorelements 12 eines Rotors 6, wie in FIG 3 gezeigt, mittels Kaltgasspritzen fixiert. Die Rotoroberfläche 16 ist als Polygonzugoberfläche ausgeführt, sodass die ebene Grundplatte 26 flächig auf der Rotoroberfläche 16 aufliegt.

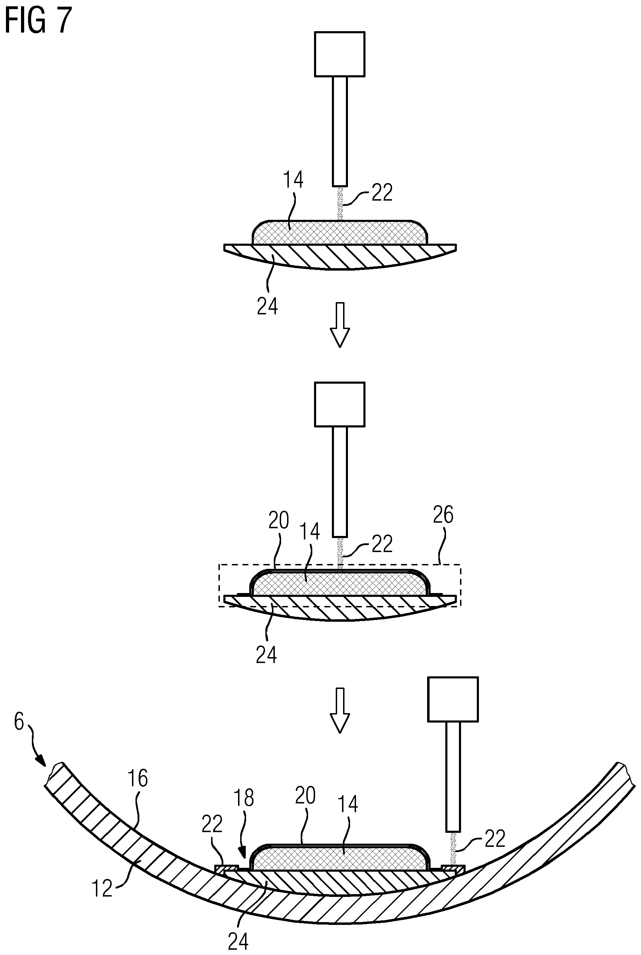

FIG 7 zeigt eine schematische Darstellung eines dritten Verfahrens zur Herstellung eines Rotors 6. Da der Rotor 6 als Außenläufer ausgestaltet ist, ist die Rotoroberfläche 6 konkav ausgeführt. Die Grundplatte 24 weist eine zur Rotoroberfläche 6 korrespondierende konvexe Auflagefläche auf, sodass die Grundplatte 24 flächig mit der Rotoroberfläche 6 verbindbar ist. Insbesondere weist die Grundplatte 24 einen kreissegmentförmigen Querschnitt auf.

Alternativ ist der Rotor 6 als Innenläufer ausgeführt, wobei bei einem Innenläufer die Rotoroberfläche 6 konvex ausgeführt ist. Eine dazu korrespondierende Grundplatte 24 für einen Innenläufer, welche in FIG 7 nicht dargestellt ist, weist entsprechend eine konkave Auflagefläche auf, sodass die Grundplatte 24 flächig mit der Rotoroberfläche 6 verbindbar ist. Die weitere Ausgestaltung des Herstellungsverfahrens in FIG 7 entspricht dem in FIG 6.

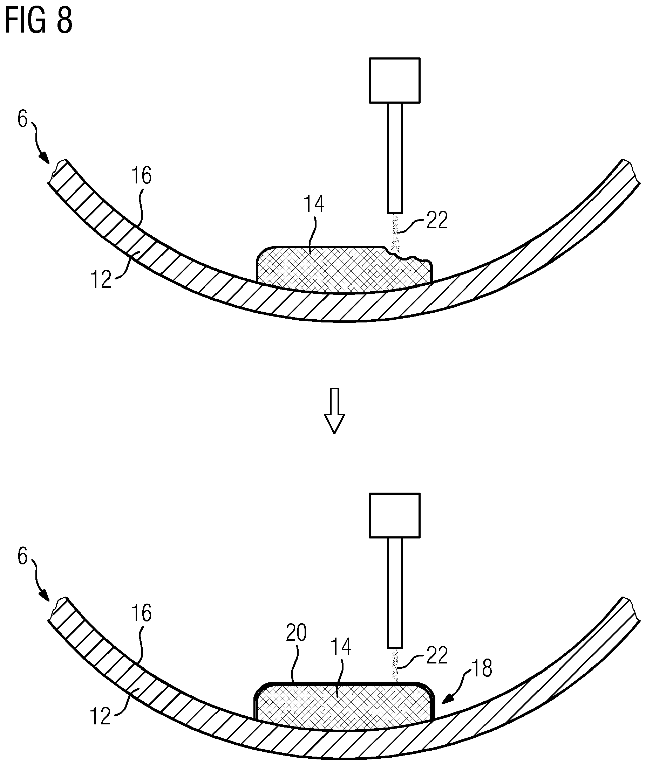

FIG 8 zeigt eine schematische Darstellung eines vierten Verfahrens zur Herstellung eines Rotors 6. Zunächst wird mindestens ein Permanentmagnet 14, zumindest teilweise, mittels Kaltgasspritzen hergestellt. Insbesondere werden Festkörperpartikel 22 aus mindestens einem magnetischen Werkstoff mittels Kaltgasspritzen direkt auf die konkave Rotoroberfläche 16 gesprüht, sodass der Permanentmagnet 14 direkt mit dem magnetfeldführenden Rotorelement 12 des Rotors 6 verbunden ist.

In einem weiteren Schritt wird eine Abdeckung 20 mittels Kaltgasspritzen direkt auf den Permanentmagneten 14 und das magnetfeldführende Rotorelement 12 gesprüht, sodass die Abdeckung 20 sowohl mit dem Permanentmagneten 14 als auch mit dem magnetfeldführenden Rotorelement 12 des Rotors 6 verbunden ist. Die weitere Ausgestaltung des Herstellungsverfahrens in FIG 8 entspricht dem in FIG 7.

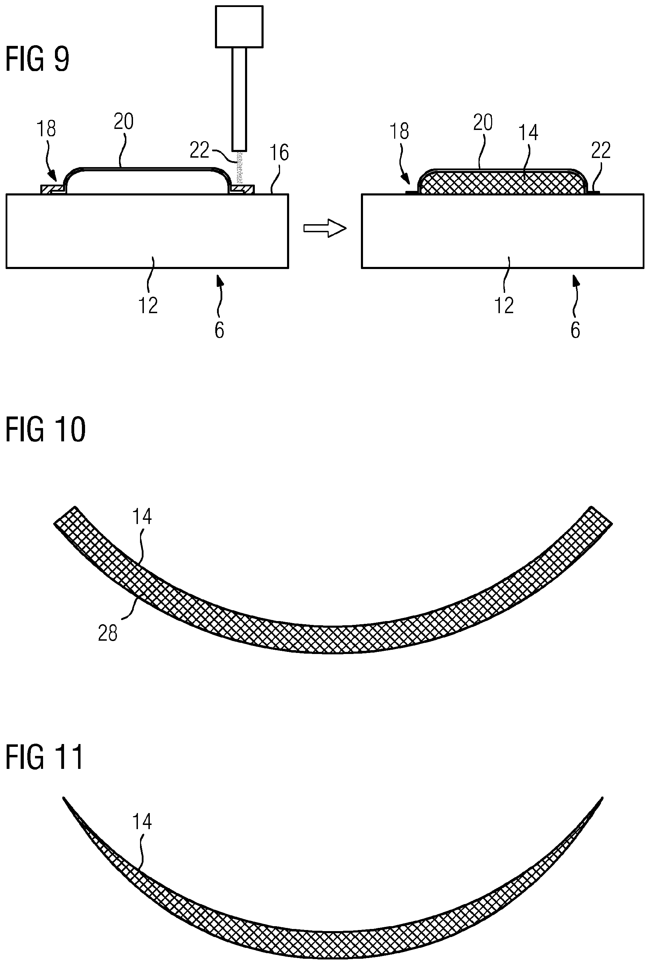

FIG 9 zeigt eine schematische Darstellung eines fünften Verfahrens zur Herstellung eines Rotors 6. Zunächst werden Verbindungsmittel 18 für mindestens einen Permanentmagneten 14, welche eine Abdeckung 20 und Festkörperpartikel 22 umfassen, mit der ebenen Rotoroberfläche 16 verbunden. Die Verbindung wird hergestellt, indem die elektrisch leitfähigen unmagnetischen Festkörperpartikel 22 mittels Kaltgasspritzen derartig aufgesprüht werden, dass die Abdeckung 20 mit dem magnetfeldführenden Rotorelement 12 verbunden ist

Daraufhin wird der mindestens eine Permanentmagnet 14 in Axialrichtung zwischen der Abdeckung 20 und der Rotoroberfläche 16 eingeführt. Die weitere Ausgestaltung des Rotors 6 in FIG 9 entspricht der in FIG 2.

FIG 10 zeigt eine Querschnittdarstellung einer ersten Ausführungsform eines Permanentmagneten 14 welcher als Schalenmagnet ausgeführt ist. Der Schalenmagnet ist mit einem additiven Fertigungsverfahren, insbesondere mittels Kaltgasspritzen, hergestellt und weist eine konvexe Kontaktfläche 28 auf, welche korrespondierend zu einer konkaven Rotoroberfläche 16 eines Außenläufers ausgeführt ist, sodass der Schalenmagnet flächig mit der Rotoroberfläche 16 des Außenläufers kontaktierbar ist.

FIG 11 zeigt eine Querschnittdarstellung einer zweiten Ausführungsform eines Permanentmagneten 14, welcher als Sichelmagnet ausgeführt ist. Der Sichelmagnet ist mit einem additiven Fertigungsverfahren, insbesondere mittels Kaltgasspritzen, hergestellt und ist durch seine Form auch in einer PM-Reluktanzmaschine verwendbar.

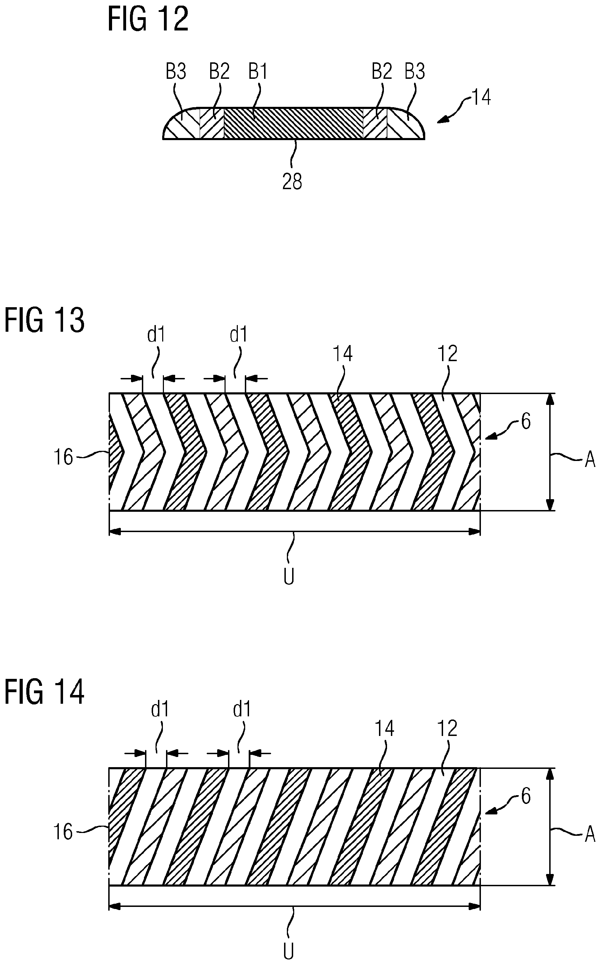

FIG 12 zeigt eine Querschnittdarstellung einer dritten Ausführungsform eines Permanentmagneten 14, welcher mit einem additiven Fertigungsverfahren, insbesondere mittels Kaltgasspritzen, aus Werkstoffen mit lokal unterschiedlichen magnetischen Eigenschaften hergestellt ist, sodass der Permanentmagnet 14, zumindest im Querschnitt, Bereiche unterschiedlicher magnetischer Flussdichte B1, B2, B3 aufweist. Beispielsweise weist der Permanentmagnet 14 in der Mitte eine maximale magnetische Flussdichte B1 auf, während diese entlang der Kontaktfläche 28 abnimmt. Die weitere Ausgestaltung des Permanentmagneten 14 in FIG 12 entspricht der in FIG 2.

FIG 13 zeigt eine schematische Darstellung einer ersten Ausführungsform einer Anordnung von Permanentmagneten 14 auf einer Rotoroberfläche 16. Die Permanentmagnete 14 sind mit einem additiven Fertigungsverfahren, insbesondere mittels Kaltgasspritzen, hergestellt und als Pfeilmagnete ausgeführt. Die Pfeilform der Permanentmagnete 14 ist in Axialrichtung A achsensymmetrisch ausgebildet. Ferner sind die Pfeilmagnete wechselnd magnetisiert mit im Wesentlichen gleichen Abständen d1 in Umfangsrichtung U auf der Rotoroberfläche 16 angeordnet.

FIG 14 zeigt eine schematische Darstellung einer zweiten Ausführungsform einer Anordnung von Permanentmagneten 14 auf einer Rotoroberfläche 16. Die Permanentmagnete 14 sind mit einem additiven Fertigungsverfahren, insbesondere mittels Kaltgasspritzen, hergestellt und weisen in Axialrichtung A eine Schrägung auf. Die Schrägung ist so ausgeführt, dass die Permanentmagnete 14 in Axialrichtung parallel und mit gleichem Abstand d1 zueinander verlaufen. Die weitere Ausgestaltung der Permanentmagnete 14 in FIG 14 entspricht der in FIG 13.

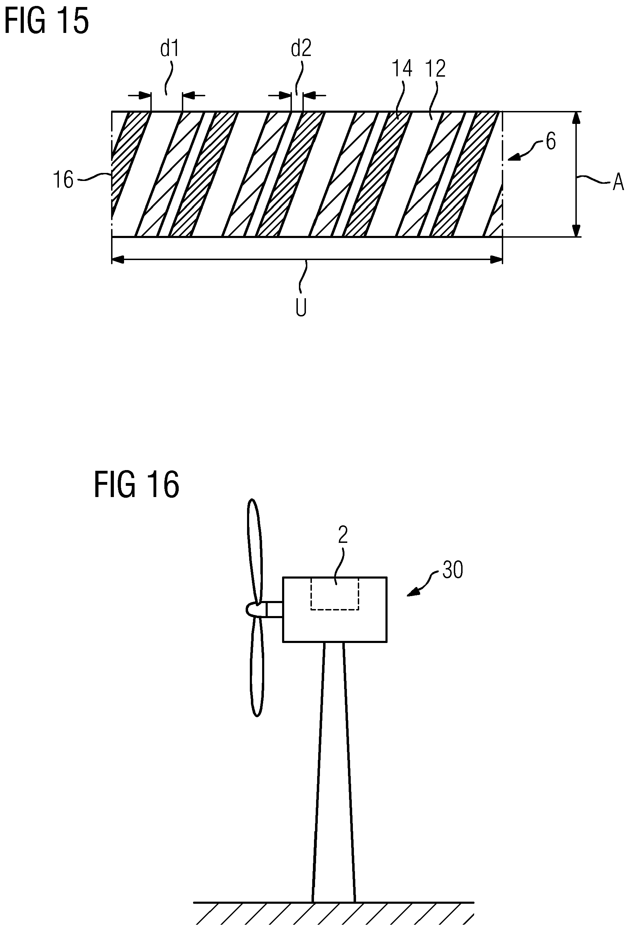

FIG 15 zeigt eine schematische Darstellung einer dritten Ausführungsform einer Anordnung von Permanentmagneten 14 auf einer Rotoroberfläche 16. Zusätzlich zu einer Schrägung weisen die Permanentmagnete 14 einen Polversatz auf. Die Permanentmagnete 14 weisen in Umfangsrichtung U unterschiedliche Abstände d1, d2 zueinander auf. Beispielhaft wiederholt sich die Reihenfolge der Abstände d1, d2 periodisch. Die weitere Ausgestaltung der Permanentmagnete 14 in FIG 15 entspricht der in FIG 14.

FIG 16 zeigt eine schematische Darstellung einer Windkraftanlage 30 mit einer elektrischen rotierenden Maschine 2. In der Windkraftanlage 30 kommt eine Ausführungsform einer erfindungsgemäßen elektrischen rotierenden Maschine 2 zum Einsatz. Die als Generator eingesetzte elektrische rotierende Maschine 2 wird direkt (als Direktantrieb) oder über ein Getriebe angetrieben.

Zusammenfassend betrifft die Erfindung ein Verfahren zur Herstellung eines Rotors 6 für eine elektrische rotierende Maschine 2 mit einem magnetfeldführenden, insbesondere wirbelstromunterdrückenden, Rotorelement 12 und mindestens einem Permanentmagneten 14. Um einen Rotor 6 anzugeben, der, im Vergleich zum Stand der Technik, einfacher und kostengünstiger herzustellen ist, wird vorgeschlagen, dass der Permanentmagnet 14 mittels eines additiven Fertigungsverfahrens mit dem magnetfeldführenden Rotorelement 12 verbunden wird.

## Patentansprüche

1. Verfahren zur Herstellung eines Rotors (6) für eine elektrische rotierende Maschine (2) mit einem magnetfeldführenden, insbesondere wirbelstromunterdrückenden, Rotorelement (12) und mindestens einem Permanentmagneten (14),
**dadurch gekennzeichnet, dass** der Permanentmagnet (14) mittels eines additiven Fertigungsverfahrens mit dem magnetfeldführenden Rotorelement (12) verbunden wird.

2. Verfahren nach Anspruch 1,
wobei der mindestens eine Permanentmagnet (14) vor der Verbindung mit dem magnetfeldführenden Rotorelement (12) magnetisiert wird.

3. Verfahren nach einem der Ansprüche 1 oder 2,
der Permanentmagnet (14) mittels Kaltgasspritzen mit dem magnetfeldführenden Rotorelement (12) verbunden wird.

4. Verfahren nach Anspruch 3,
wobei der Permanentmagnet (14) über Verbindungsmittel (18) mit dem magnetfeldführenden Rotorelement (12) verbunden wird, wobei die Verbindungsmittel (18), insbesondere elektrisch leitfähige, Festkörperpartikel (22) umfassen, welche mittels Kaltgasspritzen zur Verbindung des Permanentmagneten (14) mit dem magnetfeldführenden Rotorelement (12) aufgesprüht werden.

5. Verfahren nach Anspruch 4,
wobei die Festkörperpartikel (22) der Verbindungsmittel (20) aus einem unmagnetischen metallischen Werkstoff, insbesondere aus einem Edelstahl, hergestellt werden.

6. Verfahren nach einem der Ansprüche 4 oder 5,
wobei die Verbindungsmittel (18) eine Abdeckung (20) umfassen von der der Permanentmagnet (14) zumindest teilweise bedeckt wird.

7. Verfahren nach Anspruch 6,
wobei die Abdeckung (20) aus einem unmagnetischen metallischen Werkstoff, insbesondere aus Edelstahl, hergestellt wird.

8. Verfahren nach einem der Ansprüche 6 oder 7,
wobei die Abdeckung (20) aus Festkörperpartikeln (22) aufgebaut ist, welche mittels Kaltgasspritzen aufgesprüht werden.

9. Verfahren nach Anspruch 8,
wobei die Festkörperpartikel (22) der Abdeckung (20) direkt auf den Permanentmagneten (14) aufgesprüht werden.

10. Verfahren nach einem der Ansprüche 4 bis 9,
wobei die Verbindungsmittel (18) eine Grundplatte (24) umfassen, welche zwischen dem Permanentmagneten (14) und dem magnetfeldführenden Rotorelement (12) angeordnet wird.

11. Verfahren nach einem der Ansprüche 6 bis 9 und
Anspruch 10,
wobei die Abdeckung (20) mit der Grundplatte (24) mittels Kaltgasspritzen verbunden wird.

12. Verfahren nach einem der Ansprüche 10 oder 11,
wobei die Grundplatte (24) mit dem magnetfeldführenden Rotorelement (12) mittels Kaltgasspritzen verbunden wird.

13. Verfahren nach einem der vorherigen Ansprüche,
wobei der mindestens eine Permanentmagnet (14) zumindest teilweise mittels Kaltgasspritzen hergestellt wird.

14. Verfahren nach Anspruch 13,
wobei bei der Herstellung des mindestens einen Permanentmagneten (14) mindestens zwei magnetische Werkstoffe mit unterschiedlichen magnetischen Eigenschaften verwendet werden.

15. Verfahren nach einem der vorherigen Ansprüche,
wobei eine Form des mindestens einen Permanentmagneten (14) derartig gewählt wird, dass ein Oberwellenmoment zumindest reduziert wird.

16. Rotor (6) für eine elektrische rotierende Maschine (2), welcher mit einem Verfahren nach einem der Ansprüche 1 bis 15 hergestellt ist.

17. Rotor (6) nach Anspruch 16,
wobei der Rotor (6) als Außenläufer ausgeführt ist.

18. Elektrische rotierende Maschine (2) mit mindestens einem Rotor (6) nach einem der Ansprüche 16 oder 17.

19. Windkraftanlage (30) mit mindestens einer elektrischen rotierenden Maschine (2) nach Anspruch 18.
